# FASCICULE DE BREVET EUROPEEN

(11) **EP 0 678 807 B1**
(45) Date de publication et mention de la délivrance du brevet: **09.07.1997**
(21) Numéro de dépôt: 95400865.2
(22) Date de dépôt: 18.04.1995
(51) Int. Cl.: G06F 7/544

(54) **Dispositif de calcul arithmétique et logique et procédé de commande**
Arithmetische und logische Rechnungseinrichtung und Steuerungsverfahren
Apparatus for arithmetic and logic calculation and control process

(30) Priorité: 19.04.1994 FR 9404655
(43) Date de publication de la demande: 25.10.1995
(73) Titulaire: SGS-THOMSON MICROELECTRONICS S.A., 94250 Gentilly (FR)
(72) Inventeur: Curtet, Joel, F-94230 Cachan (FR)
(74) Mandataire: Schmit, Christian Norbert Marie

(56) Documents cités:
- EP-A- 0 136 834
- EP-A- 0 173 383
- WO-A-93/25959
- ELECTRONIC DESIGN INTERNATIONAL, vol. 38, no. 23, 13 Décembre 1990 CLEVELAND, OH, US, pages 51-63, XP 000178503 D. BURSKY 'Evolving DSP chips do more '
- PATENT ABSTRACTS OF JAPAN vol. 15 no. 247 (P-1219) ,25 Juin 1991 & JP-A-03 078083 (HITACHI LTD.) 3 Avril 1991,
- PATENT ABSTRACTS OF JAPAN vol. 15 no. 247 (P-1219), 25 Juin 1991 & JP-A-03 078083 (HITACHI LTD.)

## Description

L'invention concerne un dispositif de calcul arithmétique et logique et un procédé de commande. Ils s'appliquent notamment à tous les processeurs arithmétiques ou de traitement de signal. Ils permettent d'effectuer des calculs en double précision et en particulier des multiplications et des multiplication-accumulations en double précision.

Faire des calculs en double précision ou multi-précision veut dire que l'on travaille sur des opérandes plus larges que le bus de données, par exemple que l'on travaille avec des opérandes 32 bits sur un bus de données 16 bits.

Pour faire des multiplication-accumulations, on utilise un multiplieur et une unité arithmétique et logique. Le multiplieur effectue la multiplication entre deux opérandes, et met le produit dans un registre. L'unité arithmétique et logique ajoute le produit au résultat contenu dans un registre d'accumulation.

Pour effectuer des multiplications en double précision, quand le multiplieur accepte en entrée des opérandes de la largeur du bus de données, il faut effectuer des produits élémentaires et additionner ces produits pour obtenir le résultat de la multiplication.

On appelle produit élémentaire un produit effectué avec des opérandes de la largeur du bus de données. Dans le cas d'un bus de données 16 bits, pour une multiplication en double précision sur des opérandes 32 bits constitués chacun d'un mot de 16 bits de poids fort et d'un mot de 16 bits de poids faible, on calcule quatre produits élémentaires : le produit des deux mots de poids faible, le produit des deux mots de poids fort et les deux produits "croisés" du mot de poids faible d'un opérande avec le mot de poids fort de l'autre opérande. Les produits élémentaires sont exprimés sur 2 fois 16 bits.

Un des problèmes rencontrés est d'additionner ensemble les différents produits élémentaires pour obtenir le résultat final sur 2 fois 32 bits et, pour une opération de multiplication-accumulation, d'additionner ces produits élémentaires à un résultat intermédiaire. Pour additionner correctement les produits élémentaires de 32 bits, il faut les aligner au bon endroit dans la fenêtre du résultat de 64 bits. Pour cela, on décale le cas échéant le résultat intermédiaire et on lui ajoute le produit élémentaire. Il faut donc sauvegarder le résultat intermédiaire avant le décalage pour ne pas perdre de bits dans le résultat, ce qui oblige à gérer différents pointeurs en mémoire. Par exemple, si on a un multiplieur 16 bits et un additionneur 32 bits, et si on veut multiplier deux nombres 32 bits x1x0 et y1y0 ( x1, y1 représentant le mot de poids fort et x0, y0 représentant le mot de poids faible) et accumuler ce produit dans un accumulateur 32 bits A = A_{high} + A_{low} (A_{high} représentant les 16 bits de poids forts et A_{low} les 16 bits de poids faibles), on réalisera les différentes opérations suivantes:
x0*y0 + A dans A
A_{low} dans m0
x1*y0 + A*2⁻¹⁶ dans A
x0*y1 + A dans A
A_{low} dans m1
x1*y1 + A*2⁻¹⁶ dans A.

Comme toutes ces additions se font sur l'accumulateur et que ce dernier est toujours décalé vers la droite, la retenue et le bit de signe se propagent naturellement dans l'accumulateur.

Pour effectuer des boucles de multiplication-accumulations, il faut effectuer des manipulations sur les zones mémoires m0 et m1 et sur l'accumulateur A, puisque le résultat n'est plus cadré et qu'il est en partie dans m0 (16 bits de poids faibles) en partie dans l'accumulateur (32 bits de poids forts) et en partie dans ml (16 bits du milieu). Ce qui augmente le nombre de cycles instructions nécessaires et qui peut être très pénalisant.

On connaît de la demande de brevet européen publiée sous le numéro 0 173 383, un décaleur utilisé en entrée de l'unité arithmétique et logique pour réaliser des opérations classiques de décalage en simple précision. Par ailleurs ce document décrit une multiplication simple précision basée uniquement sur des poids forts des opérandes.

Un objet de l'invention est de faciliter les opérations en double ou plus généralement en multiprécision, en évitant notamment les manipulations mémoires. Un objet de l'invention est aussi de réduire le nombre de cycles instructions nécessaires à de telles opérations.

Selon l'invention, on utilise un décaleur sur une entrée de l'unité arithmétique et logique. Pour additionner un produit croisé de type x0*y1, on applique ce produit à l'unité arithmétique et logique, sur l'entrée avec décaleur. Ainsi, c'est le produit qui est aligné sur l'accumulateur et non pas le contraire.

Le dispositif de calcul selon l'invention, comporte en outre au moins deux accumulateurs en sortie de l'unité arithmétique et logique, un multiplieur et une unité de commande, et permet d'effectuer des instructions de double accumulation d'un produit calculé par le multiplieur : une première accumulation sur un premier accumulateur avec un décalage arithmétique à droite du produit et une deuxième accumulation sur un deuxième accumulateur avec un décalage à gauche du produit.

Mais en réalisant deux accumulations sur deux accumulateurs différents, on perd cependant la propagation naturelle de la retenue dans les opérations de multiplication-accumulations.

Dans l'invention, on prévoit des moyens pour sauvegarder une retenue précédente et pour propager la retenue générée par la première accumulation à la deuxième accumulation.

Le dispositif de calcul de l'invention est défini dans la revendication 1.

Le procédé d'utilisation d'un dispositif de calcul pour réaliser des multiplications en double-précisions selon l'invention est défini dans la revendication 6.

D'autres modes de réalisation sont définis dans les revendications dépendantes.

D'autres caractéristiques et avantages de l'invention sont donnés dans la description qui suit, faite à titre indicatif et non limitatif de l'invention et en référence aux dessins annexés dans lesquels :
- la figure 1 représente une architecture d'un dispositif de calcul arithmétique et logique selon l'invention;
- la figure 2 représente un organigramme des opérations pour une multiplication-accumulation avec double précision ' dans un dispositif de calcul arithmétique et logique selon l'invention.

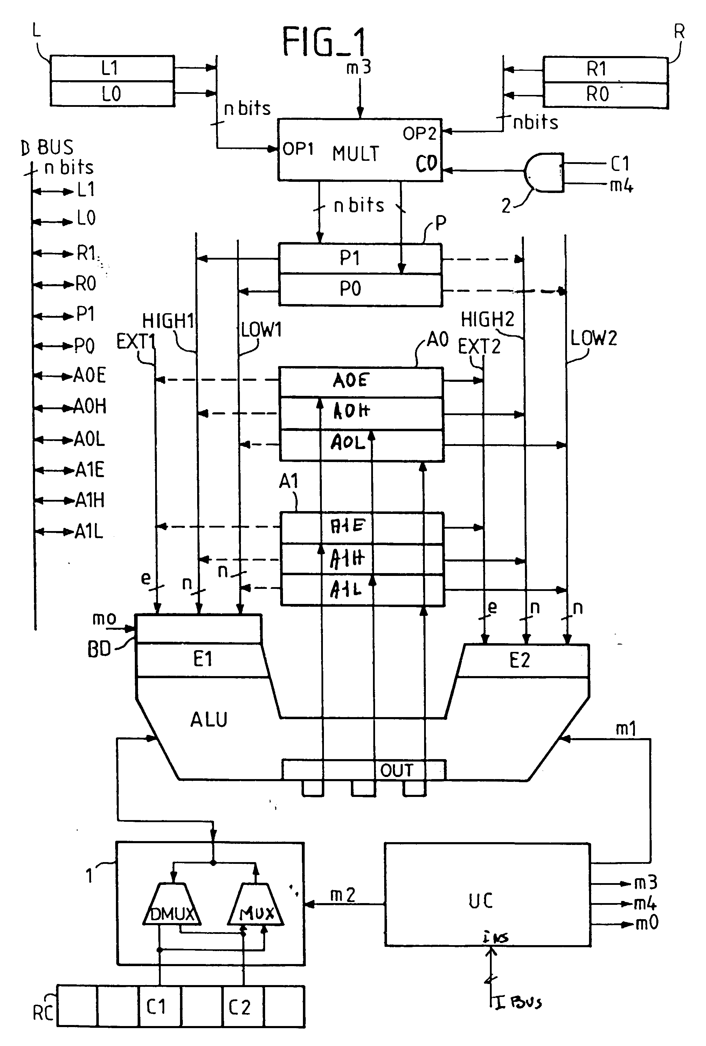

Le dispositif de calcul arithmétique et logique représenté sur la figure 1 comprend une unité de commande UC pour piloter les différents circuits du dispositif de calcul, notamment une unité arithmétique et logique ALU et un multiplieur MULT. L'unité de commande reçoit une instruction INS, par exemple, d'un bus instruction IBUS (architecture classique des processeurs de traitement de signal, dite architecture "HARVARD"). Elle délivre différents signaux de commande (m0,...m4) en fonction de cette instruction.

L'unité arithmétique et logique ALU est capable d'effectuer des instructions arithmétiques et logiques classiques ( addition, soustraction, XOR, comparaison, etc.). Elle comporte au moins deux entrées de données E1 et E2. Sur au moins une entrée, par exemple sur l'entrée E1 (figure 1), un décaleur BD est prévu. De préférence, c'est un décaleur à barillets qui permet des décalages arithmétiques et logiques. L'unité arithmétique et logique délivre un résultat sur une sortie OUT associée de préférence à aux moins deux registres de sortie A0 et A1 appelés accumulateurs. Ces accumulateurs peuvent aussi fournir des données sur les entrées E1 et E2 de l'unité arithmétique et logique.

Un premier registre C1 et un deuxième registre C2 sont prévus pour mémoriser et fournir la retenue calculée par l'unité arithmétique et logique. Un circuit 1 commandé par l'unité de commande UC permet de sélectionner celui des deux registres C1 ou C2 qui mémorise et fournit la retenue pour l'opération en cours. En fait, au début du calcul, le registre sélectionné fournit à l'unité arithmétique et logique la retenue qu'il a mémorisée. A la fin du calcul, il mémorise la nouvelle retenue. Le registre sélectionné par défaut est le registre C1.

De préférence, le circuit 1 comprend un multiplexeur/démultiplexeur recevant d'un côté le signal de retenue de l'unité arithmétique et logique, et de l'autre côté, sur une première voie, la sortie du registre C1, et sur une deuxième voie, la sortie du registre C2. Le signal de commande m2 active selon son état, soit la première voie, soit la deuxième.

En général, et comme représenté sur la figure 1, le premier registre C1 et le deuxième registre C2 sont un premier bit et un deuxième bit d'un registre de conditions RC associé à l'unité arithmétique et logique. Ce registre de conditions RC mémorise ou fournit différentes informations (retenue, signe, dépassement de capacité, etc.) délivrées ou utilisées par l'unité arithmétique et logique sur l'opération courante. Dans la suite, on confond les registres C1 et C2 avec les bits du registre de conditions. On retiendra que le bit C1 est le bit de retenue par défaut, et que le bit C2 prévu dans le dispositif de l'invention n'est utilisé que sur commande de l'unité de commande.

Le dispositif de calcul comprend aussi un multiplieur MULT. C'est de préférence un multiplieur parallèle, pour disposer d'une vitesse de calcul optimum. Mais d'autres architectures peuvent être choisies, selon l'application (multiplieur série ou parallèle-série). Le multiplieur comprend deux entrées OP1 et OP2 pour recevoir les opérandes. Ceux-ci sont fournis dans l'exemple par deux registres sources L et R. Le multiplieur comprend aussi une entrée C0 connectée à la sortie d'un circuit 2 pour appliquer la retenue sur l'étage de calcul (non représenté) du bit de poids le plus faible du produit. De préférence le circuit 2 comprend une porte logique ET qui reçoit en entrées le bit C1 et un signal de commande binaire m4 fourni par l'unité de commande.

Le multiplieur délivre le résultat de la multiplication dans un registre produit P.

Dans l'exemple de la figure 1, les données sont présentées sur n bits et l'unité arithmétique et logique est une unité double précision avec, dans l'exemple, une extension sur e bits. Un bus de données DBUS est représenté, par lequel les données sont écrites ou lues dans les différents registres de données : registre produit P, registres sources L et R ou accumulateurs A0 et A1. Ce bus de données d'une largeur de n bits est relié à un espace mémoire non représenté.

Le multiplicateur opère sur des opérandes d'entrées de n bits, et fournit un résultat dans le registre P sur 2 fois n bits. Le registre P est divisé en deux sous-registres P1 et P0 de n bits accessibles séparément du bus de données. Le sous-registre P1 reçoit les n bits de poids forts du produit et le sous-registre P0 reçoit les n bits de poids faibles du produit.

Les registres sources L et R sont chacuns divisés en deux sous-registres accessibles séparément du bus de données, un sous-registre (L1, R1) pour les n bits de poids forts, un sous-registre (L0, R0) pour les n bits de poids faibles.

Les accumulateurs A0 et A1 sont chacuns divisés en trois sous-registres accessibles séparément du bus de données : un premier (A0E, A1E) pour les e bits d'extension , un deuxième (A0H, A1H) pour les n bits de poids forts, un troisième (A0L, A1L) pour les n bits de poids faibles.

Les entrées E1 et E2 de l'unité arithmétique et logique sont de même divisées en trois sous-groupes correspondant à 3 bus locaux :

Un premier bus local EXT1, EXT2 qui peut recevoir le contenu des sous-registres contenant les bits d'extension (A0E, A1E);
- un deuxième bus local HIGH1, HIGH2 qui peut recevoir le contenu des sous-registres dédiés aux n bits de poids forts et
- un troisième bus local LOW1, LOW2 qui peut recevoir le contenu des sous-registres dédiés aux n bits de poids faibles.

Sur la figure 1, on n'a pas représenté toutes les liaisons possibles entre les bus locaux des entrées E1 et E2 et les sous-registres, d'une part pour ne pas surcharger la figure, d'autre part, car ces liaisons varient selon les architectures. D'autre part, on a représenté un seul bus de données DBUS dans un même souci de simplification. Mais certaines architectures utilisent par exemple deux bus de données chacuns reliés à un espace mémoire différent.

Sur la figure 1, on a seulement représenté les liaisons effectives pour les opérations de multiplication ou de multiplication-accumulation selon un exemple de réalisation de l'invention.

Pour de telles opérations, le contenu du registre produit P est appliqué sur l'entrée E1 avec décaleur de l'unité arithmétique et logique (P1 sur les n bits de poids forts et P0 sur les n bits de poids faibles) et l'un (A0) ou l'autre (A1) accumulateur est appliqué sur l'entrée E2 de l'unité arithmétique et logique (AiE sur les e bits d'extension, AiH sur les n bits de poids forts et AiL sur les n bits de poids faibles, avec i= 0 ou 1).

La sortie OUT de l'unité arithmétique et logique est écrite dans le même accumulateur que celui appliqué sur l'entrée E2.

Sur une instruction d'accumulation-multiplication selon l'invention, l'unité de commande applique le contenu du registre produit sur une entrée de l'unité arithmétique et logique et envoie un signal de calcul (m1) de l'accumulation à l'unité arithmétique et logique et envoie un signal de calcul (m3) d'un nouveau produit au multiplieur.

Selon l'invention, sur réception d'une instruction INS de double accumulation sur le registre produit, l'unité de commande UC commande l'application du contenu du registre P sur l'entrée E1 de l'unité arithmétique et logique avec décaleur et l'application du contenu du premier accumulateur, par exemple A0, sur l'entrée E2 et active un signal de commande (m2) sur le circuit 1 de protection du bit de retenue C1 pour que la retenue soit mémorisée ou lue dans le bit C2. Puis, elle initialise (signal de commande m0) le décaleur BD avec un décalage de n bits vers la gauche. Dans un premier cycle instruction, sur réception d'une commande de calcul d'accumulation sur le signal de commande m1, l'unité arithmétique et logique effectue son calcul, mémorise le résultat dans le premier accumulateur A0 et mémorise la retenue dans le bit C2. L'unité de commande initialise alors le décaleur avec un décalage arithmétique de n bits vers la droite et applique le contenu du deuxième accumulateur A1 sur l'entré E2 de l'unité arithmétique et logique. Dans un deuxième cycle instruction, elle envoie une deuxième commande m1 d'accumulation à l'unité arithmétique et logique. L'unité arithmétique et logique additionne les deux entrées avec la retenue de l'addition précédente mémorisée dans le bit C2, et accumule le résultat dans l'accumulateur A1.

Pour une instruction de double accumulation du registre produit et de multiplication, au deuxième cycle, l'unité de commande envoie en parallèle de la commande pour la deuxième accumulation, un signal de commande de calcul m3 au multiplieur. Le nouveau produit est mémorisé dans le registre produit. A la fin du deuxième cycle instruction, l'unité de commande désactive le signal de commande binaire m2, et réinitialise le décaleur avec un décalage nul.

Si l'instruction est une double accumulation et multiplication avec retenue, l'unité de commande active aussi à 1 le signal de commande m4 pour valider l'application du bit de retenue C1 sur l'entrée C0 du multiplieur, et désactive à 0 le signal binaire m4 à la fin du deuxième cycle d'instruction.

Le dispositif de calcul permet de faire des multiplication-accumulations en double précision de manière très simple avec un résultat parfaitement cadré sur les deux accumulateurs. Le résultat de la multiplication-accumulation est mis dans l'accumulateur A0 pour les poids faibles et dans l'accumulateur A1 pour les poids forts. Avec l'architecture représentée sur la figure 1, où l'unité arithmétique et logique et les accumulateurs sont à extension, la partie extension de l'accumulateur A0 (A0E) n'est pas significative. La partie extension de l'accumulateur A1 (A1E) représente l'extension éventuelle de signe du résultat. L'invention s'applique aussi bien à des unités arithmétiques et logiques sans extension.

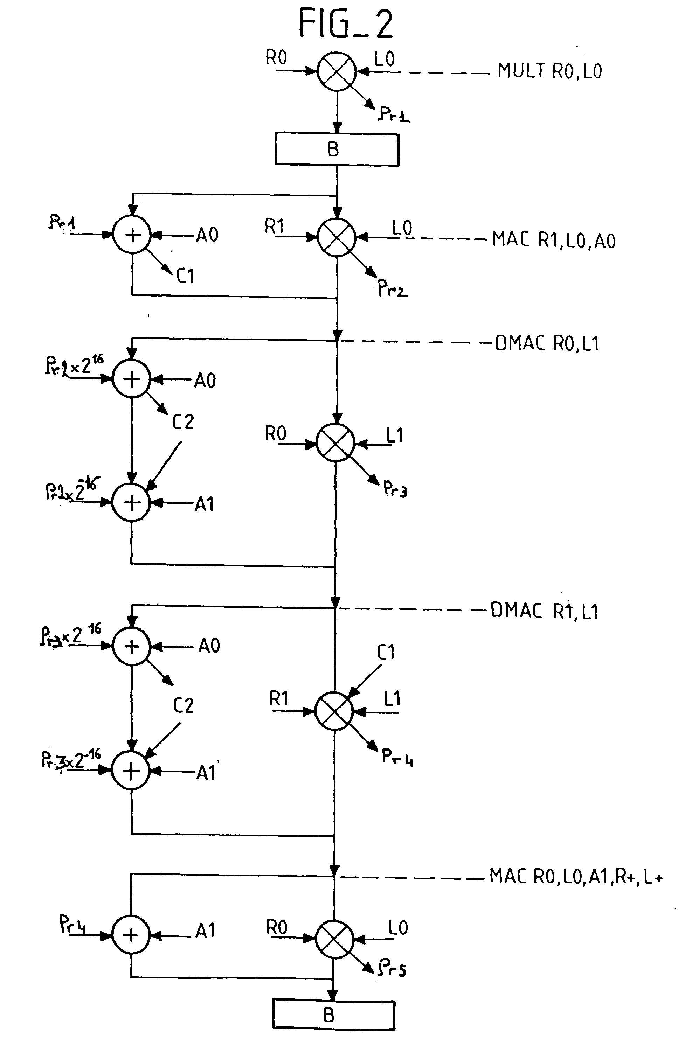

Sur la figure 2 un organigramme d'une boucle de calcul de multiplication-accumulation avec un dispositif de calcul selon l'invention est représenté.

Les opérandes à multiplier sont mis dans les registres R et L. Dans l'exemple de la figure 2, on a choisi n égal à 16. Les registres sources (R,L) et produit (P) sont donc des registres 2 fois 16 bits.

Avant de rentrer dans la boucle de calcul de multiplication-accumulations, il faut d'abord calculer un premier produit Pr1, puisque le principe de l'invention consiste à accumuler le produit précédent et calculer le produit suivant.

Le procédé de commande commence donc par une instruction de calculer le produit Pr1 des mots de poids faible R0, L0 des deux premiers opérandes (MULT R0,L0). Le multiplieur est activé et le produit est mis dans le registre P.

On entre alors dans la boucle au point d'entrée B, qui commence par une instruction d'accumulation-multiplication (MAC R1,L0, A0) : on calcule dans le même cycle instruction l'accumulation du produit précédent Pr1=R0.L0 dans l'accumulateur A0, et un premier produit croisé Pr2, c'est à dire le produit du mot de poids fort d'un opérande, par exemple R1 avec le mot de poids faible de l'autre opérande, dans l'exemple L0. L'accumulation génère une retenue mémorisée dans le bit C1. (Si l'accumulateur A0 a été initialisé à zéro, cette retenue est nulle.)

L'instruction suivante est alors une instruction de double accumulation-multiplication (DMAC R0,L1) :
- au premier cycle instruction, l'unité arithmétique et logique calcule une première accumulation du produit précédent Pr2 avec un décalage de 16 bits à gauche avec l'accumulateur A0. L'accumulation génère une retenue mémorisée dans le bit C2.
- au deuxième cycle instruction, l'unité arithmétique et logique calcule une deuxième accumulation du produit précédent Pr2 avec un décalage arithmétique de 16 bits à droite avec l'accumulateur A1, et avec la retenue mémorisée dans le bit C2. Dans le même temps, le multiplieur calcule le deuxième produit croisé Pr3, dans l'exemple Pr3=R0.L1.

Ensuite, on exécute une instruction de double accumulation-multiplication avec retenue (DMAC R1, L1, C0).
- dans un premier cycle instruction, l'unité arithmétique et logique calcule une première accumulation du produit précédent Pr3 avec un décalage de 16 bits à gauche avec l'accumulateur A0. L'accumulation génère une retenue mémorisée dans le bit C2.
- au deuxième cycle instruction, l'unité arithmétique et logique calcule une deuxième accumulation du produit précédent Pr3 avec un décalage arithmétique de 16 bits à droite avec l'accumulateur A1, et avec la retenue mémorisée dans le bit C2. Dans le même temps, le multiplieur calcule le produit Pr4 des mots de poids fort, en appliquant le bit de retenue C1 sur l'entrée C0 du multiplieur: Pr4=R1.L1 + C1. Et les registres sources R et L sont chargés avec les opérandes suivants (R+,L+).

Enfin, on exécute une instruction d'accumulation-multiplication simple (MAC R0, L0, A1). L'unité arithmétique et logique calcule l'accumulation du produit précédent Pr4 avec l'accumulateur A1, et le multiplieur calcule le produit Pr5 des mots de poids faible de nouveaux opérandes Pr5=R0.L0. On peut repartir en B pour la deuxième boucle de calcul.

Le procédé de commande pour une multiplication-accumulation en double précision présenté ici vaut pour des nombres représentés en virgule fixe, signés, et entiers ou fractionnels. On notera que la multiplication des mots de poids faible est une multiplication de nombres non signés, celle des mots de poids fort, de nombres signés et les produits croisés sont des multiplications d'un nombre signé avec un nombre non signé; la gestion du type de produit à effectuer dans le multiplieur MULT est réalisée par l'unité de commande.

Pour effectuer une multiplication en double précision sans accumulation, il suffit, à la place de la dernière instruction de multiplication-accumulation MAC, d'effectuer une simple accumulation sur l'accumulateur A1, les accumulateurs A0 et A1 étant initialisés à zéro en début de calcul. On notera que pour une multiplication en double précision sans accumulation, il n'est pas nécessaire d'appliquer la retenue C1 au multiplieur pour le calcul du produit des mots de poids fort, car le premier produit des mots de poids faible est accumulé dans ce cas avec un accumulateur remis à zéro, impliquant nécessairement une retenue nulle.

Le dispositif de calcul selon l'invention, permet donc des multiplications ou multiplication-accumulations en double précision très facilitées.

D'une manière générale, le décaleur placé sur au moins une entrée de l'unité arithmétique et logique permet des manipulations sur les données sans avoir à modifier le contenu des accumulateurs : on effectue le cadrage - sur les données et non plus sur les accumulateurs. Ceci s'applique aussi bien aux additions et soustractions et à toutes les manipulations de bits.

Le dispositif de calcul arithmétique et logique selon l'invention n'est pas limité à l'architecture présentée à la figure 1. Notamment d'autres architectures de bus sont possibles, il peut y avoir d'autres registres ou d'autres unités de calcul. Les façons de gérer les registres en liaison avec les espaces mémoires ne sont pas indiquées mais sont réalisées selon les différentes possibilités offertes par l'état de l'art.

## Revendications

1. Dispositif de calcul arithmétique et logique à unité de commande (UC) comprenant un multiplieur (MULT) avec un registre produit (P) de sortie applicable sur une entrée avec décaleur (BD) d'une unité arithmétique et logique (ALU) avec au moins deux accumulateurs de sortie (A0, A1), un premier registre (C1) et un deuxième registre (C2) pour mémoriser et propager une retenue générée par une opération courante à une opération suivante de l'unité arithmétique et logique, caractérisé en ce que pour permettre des multiplication-accumulations d'opérandes en double précision le dispositif de calcul comprend un premier circuit (1), pour soit sélectionner le premier registre (1) pour stocker une retenue générée pendant un premier calcul effectué sur les parties de poids faible des opérandes, soit sélectionner le deuxième registre (C2) pour stocker les retenues générées durant les autres cycles de calcul et un deuxième circuit permettant l'application du contenu du premier registre sur une entrée (C0) du multiplieur afin d'intégrer ce contenu dans le cycle de multiplication effectué sur les parties de poids fort des opérandes.

2. Dispositif de calcul selon la revendication 1, caractérisé en ce que le premier circuit est un multiplexeur/démultiplexeur à deux voies, une première reliée au premier registre (C1) et une deuxième reliée au deuxième registre (C2), ledit premier circuit recevant un signal de commande (m2) de l'unité de commande pour valider soit la première, soit la deuxième voie.

3. Dispositif de calcul selon la revendication 1 ou 2, caractérisé en ce que le deuxième circuit est une porte ET recevant en entrées un signal de commande binaire (m4) de l'unité de commande (UC) et la sortie du premier registre (C1) et dont la sortie est appliquée sur une entrée (C0) du multiplieur.

4. Dispositif de calcul arithmétique et logique, selon l'une quelconque des revendications 1 à 3, caractérisé en ce que le décaleur en entrée de l'unité arithmétique et logique est un décaleur à barillets.

5. Dispositif de calcul selon l'une quelconque des revendications 1 à 4, caractérisé en ce que pour chaque produit croisé (L0 x R1, R0 x L1) calculé par le multiplieur, le décaleur reçoit ensuite une première commande de cadrage sur le premier accumulateur, pour permettre l'addition du contenu du registre produit avec le contenu du premier accumulateur et la mémorisation d'une retenue dans le deuxième registre (C2) puis une deuxième commande de cadrage sur le deuxième accumulateur, pour permettre l'addition du contenu du registre produit avec le contenu du deuxième accumulateur avec prise en compte de la retenue mémorisée dans le deuxième registre (C2).

6. Procédé d'utilisation d'un dispositif de calcul arithmétique et logique à unité de commande (UC) comprenant un multiplieur (MULT) avec un registre produit (P) de sortie applicable sur une entrée avec décaleur (BD) d'une unité arithmétique et logique (ALU) avec au moins deux accumulateurs de sortie (A0, A1), un premier registre (C1) et un deuxième registre (C2) pour mémoriser et propager une retenue générée par une opération courante à une opération suivante de l'unité arithmétique et logique, caractérisé en ce que pour permettre des multiplication-accumulations d'opérandes en double précision un premier circuit (1) est commandé, pour soit sélectionner le premier registre (1) pour stocker une retenue générée pendant un premier calcul effectué sur les parties de poids faible des opérandes, soit sélectionner le deuxième registre (C2) pour stocker les retenues générées durant les autres cycles de calcul et un deuxième circuit est commandé pour appliquer le contenu du premier registre sur une entrée (C0) du multiplieur afin d'intégrer ce contenu dans le cycle de multiplication effectué sur les parties de poids fort des opérandes.

7. Procédé selon la revendication 6, caractérisé en ce que, ledit premier circuit reçoit un signal de commande (m2) de l'unité de commande pour valider soit une première voie reliée au premier registre (C1), soit la deuxième voie reliée au deuxième registre C2 d'un multiplexeur/démultiplexeur.

8. Procédé selon la revendication 6 ou 7, caractérisé en ce qu'il utilise un décaleur à barillets en entrée de l'unité arithmétique et logique.

9. Procédé selon selon l'une des revendications 6 à 8, caractérisé en ce que pour chaque produit croisé (L0 x R1, R0 x L1) calculé par le multiplieur, le décaleur reçoit ensuite une première commande de cadrage sur le premier accumulateur, pour permettre l'addition du contenu du registre produit avec le contenu du premier contenu du registre produit avec le contenu du premier accumulateur et la mémorisation d'une retenue dans le deuxième registre (C2) puis une deuxième commande de cadrage sur le deuxième accumulateur, pour permettre l'addition du contenu du registre produit avec le contenu du deuxième accumulateur avec prise en compte de la retenue mémorisée dans le deuxième registre (C2).

## Patentansprüche

1. Logische und arithmetische Rechenvorrichtung mit einer Steuereinheit (UC), umfassend einen Multiplizierer (MULT) mit einem Produktregister (P), dessen Ausgang einem Eingang mit einer Schiebeeinrichtung (BD) einer Arithmetik- und Logik-Einheit (ALU) mit zumindest zwei Ausgangs-Akkumulatoren (A0, A1) zuführbar ist, ein erstes Register (C1) und ein zweites Register (C2) zum Speichern und Weitergeben eines durch eine gegenwärtige Operation generierten Übertrags an eine nachfolgende Operation der Arithmetik- und Logikeinheit, dadurch gekennzeichnet, daß die Rechenvorrichtung zum Ermöglichen von Multiplikation-Akkumulationen von Operanden mit doppelter Genauigkeit eine erste Schaltung (1), die entweder das erste Register (C1) auswählt, um einen während einer ersten, über die Abschnitte der Operanden mit geringem Gewicht ausgeführten Berechnung generierten Übertrag zu speichern, oder das zweite Register (C2) auswählt, um die während der anderen Rechenzyklen generierten Überträge zu speichern, und eine zweite Schaltung, die das Anlegen des Inhalts des ersten Registers an einen Eingang (C0) des Multiplizierers erlaubt, um diesen Inhalt in dem über die Abschnitte der Operanden mit großem Gewicht ausgeführten Multiplikationszyklus zu integrieren, umfaßt.

2. Rechenvorrichtung nach Anspruch 1, dadurch gekennzeichnet, daß die erste Schaltung ein Multiplexer/Demultiplexer mit zwei Wegen ist, von welchen ein erster mit dem ersten Register (C1) und ein zweiter mit dem zweiten Register (C2) verbunden ist, wobei die erste Schaltung ein Steuersignal (m2) von der Steuereinheit empfängt, um entweder den ersten oder den zweiten Weg freizugeben.

3. Rechenvorrichtung nach Anspruch 1 oder 2, dadurch gekennzeichnet, daß die zweite Schaltung ein UND-Tor ist, welches eingangsseitig ein binäres Steuersignal (m4) von der Steuereinheit (UC) und den Ausgang des ersten Registers (C1) empfängt, und dessen Ausgang an einen Eingang (C0) des Multiplizierers geführt ist.

4. Logische und arithmetische Rechenvorrichtung nach einem der Ansprüche 1 bis 3, dadurch gekennzeichnet, daß die Schiebeeinrichtung am Eingang der Arithmetik- und Logikeinheit eine Ring-Schiebeeinrichtung ist.

5. Rechenvorrichtung nach einem der Ansprüche 1 bis 4, dadurch gekennzeichnet, daß die Schiebeeinrichtung für jedes durch den Multiplizierer berechnete Kreuzprodukt (L0 x R1, R0 x L1) zunächst eine erste Ausrichtanweisung für den ersten Akkumulator empfängt, um die Addition des Inhalts des Produktregisters mit dem Inhalt des ersten Akkumulators und die Speicherung eines Übertrags in dem zweiten Register (C2) zu ermöglichen, und dann eine zweite Ausrichtanweisung für den zweiten Akkumulator empfängt, um die Addition des Inhalts des Produktregisters mit dem Inhalt des zweiten Akkumulators unter Berücksichtigung des in dem zweiten Register (C2) gespeicherten Übertrags zu ermöglichen.

6. Verfahren zur Verwendung einer logischen und arithmetischen Recheneinrichtung mit einer Steuereinheit (UC), umfassend einen Multiplizierer (MULT) mit einem Produktregister (P), dessen Ausgang einem Eingang mit einer Schiebeeinrichtung (BD) einer Arithmetik- und Logik-Einheit (ALU) mit zumindest zwei Ausgangs-Akkumulatoren (A0, A1) zuführbar ist, ein erstes Register (C1) und ein zweites Register (C2) zum Speichern und Weitergeben eines durch eine gegenwärtige Operation generierten Übertrags an eine nachfolgende Operation der Arithmetik- und Logikeinheit, dadurch gekennzeichnet, daß zum Ermöglichen von Multiplikation-Akkumulationen von Operanden mit doppelter Genauigkeit eine erste Schaltung (1) so gesteuert wird, daß sie entweder das erste Register (C1) auswählt, um einen während einer ersten, über die Abschnitte der Operanden mit geringem Gewicht ausgeführten Berechnung generierten Übertrag zu speichern, oder das zweite Register (C2) auswählt, um die während der anderen Rechenzyklen generierten Überträge zu speichern, und eine zweite Schaltung so gesteuert wird, daß sie den Inhalt des ersten Registers einem Eingang (C0) des Multiplizierers zuführt, um diesen Inhalt in dem über die Abschnitte der Operanden mit großem Gewicht ausgeführten Multiplikationszyklus zu integrieren.

7. Verfahren nach Anspruch 6, dadurch gekennzeichnet, daß die erste Schaltung ein Steuersignal (m2) von der Steuereinheit empfängt, welches entweder einen ersten, mit dem ersten Register (C1) eines Multiplexers/Demultiplexers verbundenen Signalpfad, oder den zweiten, mit dem zweiten Register (C2) eines Multiplexers/Demultiplexers verbundenen Signalpfad freigibt.

8. Verfahren nach Anspruch 6 oder 7, dadurch gekennzeichnet, daß eine Ring-Schiebeeinrichtung am Eingang der Arithmetik- und Logikeinheit verwendet wird.

9. Verfahren nach einem der Ansprüche 6 bis 8, dadurch gekennzeichnet, daß die Schiebeeinrichtung für jedes durch den Multiplizierer berechnete Kreuzprodukt (L0 x R1, R0 x L1) zunächst eine erste Ausrichtanweisung für den ersten Akkumulator empfängt, um die Addition des Inhalts des Produktregisters mit dem Inhalt des ersten Akkumulators und die Speicherung eines Übertrags in dem zweiten Register (C2) zu ermöglichen, und dann eine zweite Ausrichtanweisung für den zweiten Akkumulator empfängt, um die Addition des Inhalts des Produktregisters mit dem Inhalt des zweiten Akkumulators unter Berücksichtigung des in dem zweiten Register (C2) gespeicherten Übertrags zu ermöglichen.

## Claims

1. Arithmetic logic calculation device with control unit (UC) comprising a multiplier (MULT) with a product output register (P) which can be applied to an input with shifter (BD) of an arithmetic logic unit (ALU) with at least two output accumulators (A0, A1), a first register (C1) and a second register (C2) for storing and propagating a carry generated by a current operation to a following operation of the arithmetic logic unit, characterised in that, in order to enable multiplication/additions of double-precision operands, the calculation device comprises a first circuit (C1), in order either to select the first register (1) to store a carry generated during a first calculation performed on the least significant parts of the operands, or to select the second register (C2) to store the carries generated during the other calculation cycles, and a second circuit enabling application of the contents of the first register to an input (C0) of the multiplier in order to incorporate these contents in the multiplication cycle performed on the most significant parts of the operands.

2. Calculation device according to Claim 1, characterised in that the first circuit is a two-channel multiplexer/demultiplexer, a first channel connected to the first register (C1) and a second channel connected to the second register (C2), the said first circuit receiving a control signal (m2) from the control unit to select either the first or the second channel.

3. Calculation device according to Claim 1 or 2, characterised in that the second circuit is an AND gate receiving as inputs a binary control signal (m4) from the control unit (UC) and the output of the first register (C1), and with its output applied to an input (C0) of tile multiplier.

4. Arithmetic logic calculation device according to any one of Claims 1 to 3, characterised in that the shifter at the input of the arithmetic logic unit is a barrel shifter.

5. Calculation device according to any one of Claims 1 to 4, characterised in that, for each cross product (L0 x R1, R0 x L1) calculated by the multiplier, the shifter then receives a first command for alignment on the first accumulator, to enable the addition of the contents of the product register with the contents of the first accumulator and the storing of a carry in the second register (C2), then a second command for alignment on the second accumulator, to enable the addition of the contents of the product register with the contents of the second accumulator, taking into account the carry stored in the second register (C2).

6. Method of using an arithmetic logic calculation device with control unit (UC) comprising a multiplier (MULT) with a product output register (P) which can be applied to an input with shifter (BD) of an arithmetic logic unit (ALU) with at least two output accumulators (A0, A1), a first register (C1) and a second register (C2) for storing and propagating a carry generated by a current operation to a following operation of the arithmetic logic unit, characterised in that, in order to enable multiplication/additions of double-precision operands, a first circuit (1) is controlled, in order either to select the first register (1) to store a carry generated during a first calculation performed on the least significant parts of the operands, or to select the second register (C2) to store the carries generated during the other calculation cycles, and a second circuit is controlled in order to apply the contents of the first register to an input (C0) of the multiplier in order to incorporate these contents in the multiplication cycle performed on the most significant parts of the operands.

7. Method according to Claim 6, characterised in that the said first circuit receives a control signal (m2) from the control unit in order to select either a first channel connected to the first register (C1), or the second channel connected to the second register C2, of a multiplexer/demultiplexer.

8. Method according to Claim 6 or 7 characterised in that it uses a barrel shifter at the input of the arithmetic logic unit.

9. Method according to one of Claims 6 to 8, characterised in that for each cross product (L0 x R1, R0 x L1) calculated by the multiplier, the shifter then receives a first command for alignment on the first accumulator, to enable the addition of the contents of the product register with the contents of the first accumulator and the storing of a carry in the second register (C2), then a second command for alignment on the second accumulator, to enable the addition of the contents of the product register with the contents of the second accumulator, taking into account the carry stored in the second register (C2).
